Europäisches Patentamt

(19) European Patent Office

Office européen des brevets

(11) Publication number : **0 406 465 B1**

(12) **EUROPEAN PATENT SPECIFICATION**

(45) Date of publication of patent specification :
06.05.92 Bulletin 92/19

(51) Int. Cl.⁵ : **H01M 4/20**

(21) Application number : **89112287.1**

(22) Date of filing : **05.07.89**

(54) **Procedure and means for detaching storage battery plates treated with active material form the conveying base.**

(43) Date of publication of application :
09.01.91 Bulletin 91/02

(45) Publication of the grant of the patent :
06.05.92 Bulletin 92/19

(84) Designated Contracting States :
AT BE CH DE ES FR GB GR IT LI LU NL SE

(56) References cited :
US-A- 2 074 065

(73) Proprietor : **NESTE OY**
**Keilaniemi**
**SF-02150 Espoo (FI)**

(72) Inventor : **Kärnä, Toivo**
**Kuskintie 3**
**SF-06400 Porvoo (FI)**
Inventor : **Luukka, Martti**
**Koivukuja 3**
**SF-51200 Kangasniemi (FI)**
Inventor : **Niemi, Timo**
**Myllytuvantie 2 as 18**
**SF-40630 Jyväskylä (FI)**
Inventor : **Fredenberg, Frey**
**Mustion Ruukki**
**SF-10360 Mustio (FI)**

(74) Representative : **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**W-8000 München 2 (DE)**

## Description

The present invention concerns a procedure and a means for detaching compound-applied storage battery plates from a conveying base.

The plates of lead storage batteries are in general manufactured so that on a conveying base, for instance on a plate blank made from lead wire reticule or grid located on a belt is applied active material which contains lead oxide, water, sulphurous acid, and additives. The compound is pressed and smoothed for instance with rollers, and it is detached from said conveying base with the aid of a cut-off member, for which usually a stressed metal wire is used.

The active material is clay-like and sticky in nature, which causes trouble in applying, smoothing and detaching said compound from said conveying base. The stretched metal wire used for the detaching tends to catch the material surface on the storage plate, and hereby a tearing effect is produced, causing unevenness on the compound-applied plate, and even holes.

The present invention concerns a procedure with the aid of which the material-coated storage plate blank can be detached from the conveying base cleanly and gently so that neither unevenness nor holes are produced on said material-coated plate. The procedure of the invention for detaching material-coated storage plates from a mobile conveying base across said conveying base with the aid of a wire-resembling or strip-like cut-off member placed on the level thereof or in the vicinity thereof is characterized in that said cut-off member is brought into move ment in the direction of its longitudinal axis.

For the cut-off member in the procedure of the invention can be used a thin wire, for instance metal or plastic wire. Also a thin strip of metal or plastic may constitute the cut-off member, its edge acting as the detaching member in the manner of a wire. Said cut-off member has been placed across the conveying plane either on the same level or at least in the immediate vicinity of said level.

The cut-off member may travel all the way in the same direction, or, as another alternative, it may be in reciprocating movement. The travelling direction of the cut-off member is advantageously perpendicular to said travelling direction. The cut-off member may also be mounted in an angle to the travelling direction, whereby its travelling direction constitutes an angle with respect to the travelling direction of the travelling direction of the conveying base the size of which can be for instance in the range 1 to 179°.

The aim of the invention is also a means for detaching storage battery plates treated with active mass from a mobile conveying base, said means being characterized in that it comprises a wire-like or band-like cut-off member placed across the conveying base on the level thereof or in its vicinity, and guide members for guiding and moving said cut-off member in its longitudinal axis.

The guide members in the means of the invention may consist of two or several rolls or grooved wheels which guide and convey a wire-like or band-like cut-off member. To one or several guide rolls may be connected a means which rotates it for keeping the cut-off member in motion. The cut-off member constitutes advantageously an endless loop. The guide members may be so placed that the travelling direction of the cut-off member at the conveying base is perpendicular to the travelling direction of the conveying member, or said directions form an angle the size of which is in the range 1 to 179°.

According to a second advantageous embodiment of the means of the invention, the cut-off member comprises a wire or bond which is in reciprocating movement. Said reciprocating movement can be produced for instance with the aid of a mechanical or electromechanical oscillator. Hereby, one end of the cut-off member has been attached to the oscillating member and the other end has advantageosly been attached by means of a spring.

Some advantageous embodiments of the invention is described in the following in detail referring to the figures attached, in which

Fig. 1 presents a means viewed in the travelling direction of the conveying base in which the cut-off member forms an unending loop,

Fig. 2 presents a means of Fig. 1 in top view, and

Fig. 3 presents the means of the invention in the travelling direction of the conveying base, in which the cut-off member is in reciprocating movement.

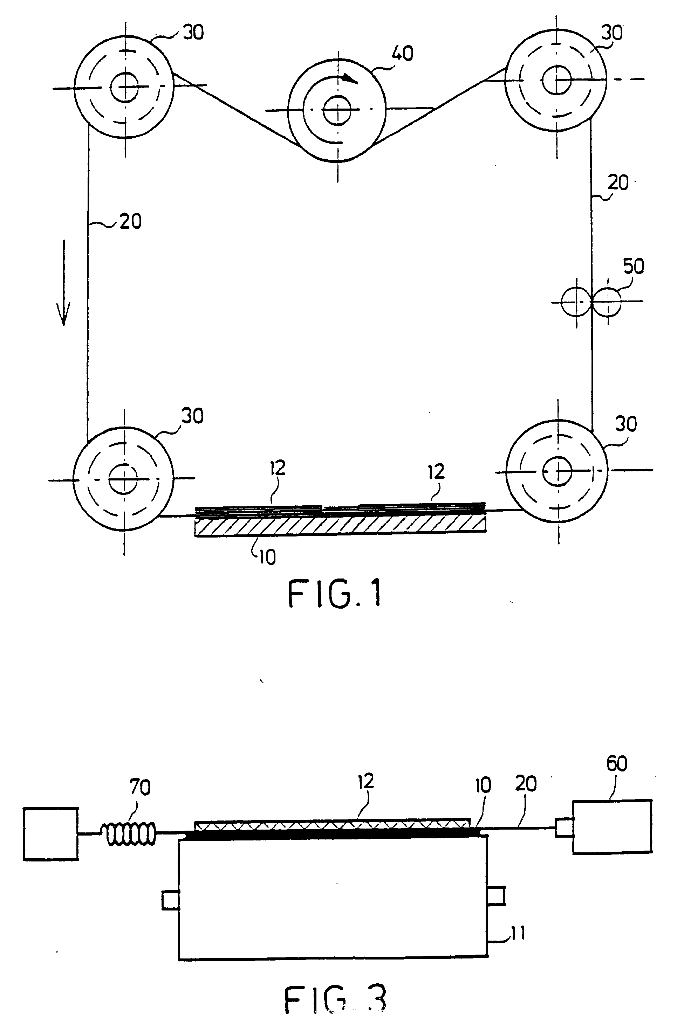

In Fig. 1, with reference numeral 10 is indicated a conveyor belt conveying and supporting a material-coated plate blank 12 delivered from a material-coating means (not depicted). A cut-off member 20, which is a thin wire or band, travels around guide wheels 30 forming an unending loop. The guide wheel 40 is provided with not-depicted rotating means for moving the wire 20. It goes without saying that any og the guide wheels 30 is rotatable in the manner of the guide wheel 40. With reference numeral 50 is indicated the wire cleaning means which may be formed, for instance, from two cleaning rollers.

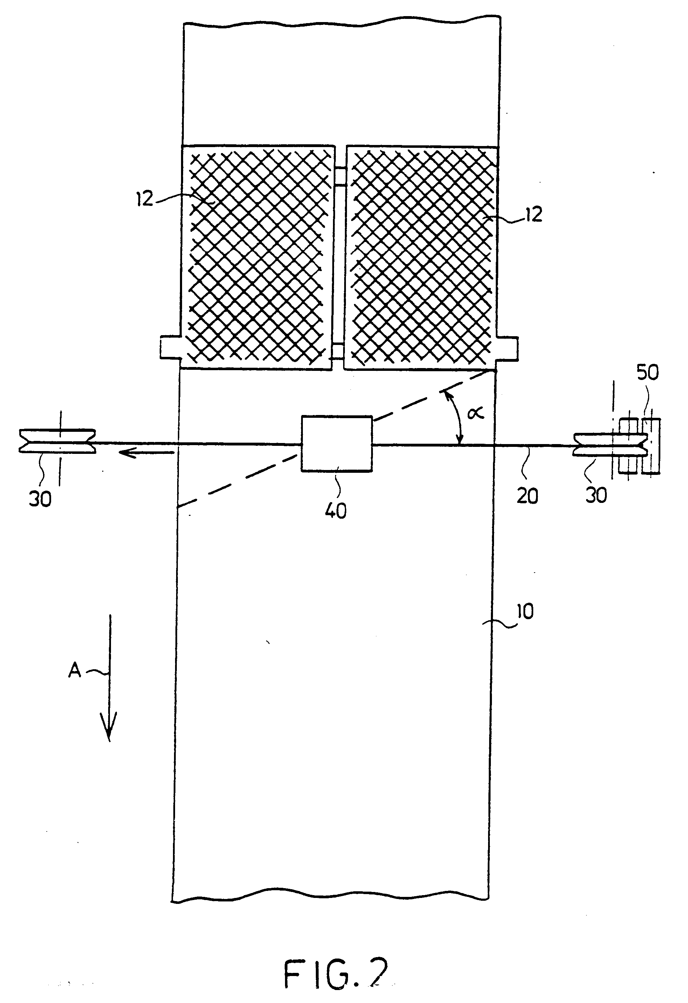

In Fig. 2, the same means is presented in top view. The travelling path of the conveying base is indicated by arrow A. The guide wheels 30 may also be so placed that the travelling direction of the wire 20 is not perpendicular to the travelling direction of the conveying base 10, but forms an angle therewith indidcated by letter $\alpha$.

In Fig. 3, the embodiment of the means of the invention is presented in which on the belt 10 supported by the roller 11 is placed a material-coated storage plate 12. The cut-off wire 20 is in said embodiment attached at one end to an oscillator 60 and at the other, to a spring 70. The oscillator 60 brings the wire 20 into rapid reciprocating movement which produces a similar effect as the cut-off wire presented in Figs 1 and 2.

A procedure and a means for detaching material-coated storage battery plates (12) from a mobile conveying base (10) with the aid of a wire-like or band-like cut-off member (20) placed across the conveying base on the level or in the vicinity thereof, said member having been brought into movement in its longitudinal direction during the detaching process.

## Claims

1. A procedure for detaching material-coated storage battery plates from a mobile conveying base with the aid of a wire-like or band-like cut-off member placed across the conveying base on the level or in the vicinity there-of, characterized in that said cut-off member has been brought into movement in the direction of its longitudinal axis during the detaching process.

2. Procedure according to claim 1, characterized in that said cut-off member moves in the same direction throughout the detaching process.

3. Procedure according to claim 1, characterized in that said cut-off member is in reciprocating movement during the detaching process.

4. Procedure according to claim 1 to 4, characterized in that the travelling path of said cut-off member forms an angle with the travelling direction of the conveying base.

5. A means for detaching material-coated storage battery plates (12) from a mobile conveying base (10), characterized in that it comprises a wire-like or band-like cut-off member (20) placed across the conveying base (10) on the level or in the vicinity thereof, and guide members (30,40) for guiding and moving said cut-off member (20) in the direction of its longitudinal axis.

6. Means according to claim 5, characterized in that said guide members (30,40) have been so placed that the travelling direction of said cut-off member (20) forms an angle with the conveying direction of the conveying rail (10).

7. Means according to claim 5-6, characterized in that said guide members consist of two or several guide rolls, or drive rolls (30,40) for guiding and moving said cut-off member (20).

8. Means according to claim 5 to 7, characterized in that the cut-off members (20) consists of an unending wire or band.

9. Means according to claim 5-6, characterized in that the cut-off member (20) consists of a wire or band which with the aid of a mechanical or electromechanical oscillator has been brought into reciprocating movement.

10. Means according to claim 9, characterized in that the cut-off member (20) is at one end attached to a spring member (70).

## Patentansprüche

1. Verfahren zum Ablösen von materialbeschichteten Akkumulatorplatten von einer beweglichen Förderunterlage mit Hilfe eines draht- oder bandartigen Abtrennelements, das quer über die Förderunterlage hinweg auf deren Niveau oder in dessen Nähe angeordnet ist, dadurch gekennzeichnet, daß das genannte Abtrennelement während des Ablösevorgangs in der Richtung seiner Längsachse in Bewegung versetzt worden ist.

2. Verfahren nach Anspruch 1, dadurch gekennzeichnet, daß sich das genannte Abtrennelement während des Ablösevorgangs in derselben Richtung bewegt.

3. Verfahren nach Anspruch 1, dadurch gekennzeichnet, daß sich das genannte Abtrennelement während des Ablösevorgangs in einer hin- und hergehenden Bewegung befindet.

4. Verfahren nach Anspruch 1 bis 3, dadurch gekennzeichnet, daß die Bewegungsbahn des genannten Abtrennelements einen Winkel mit der Bewegungsrichtung der Förderunterlage bildet.

5. Einrichtung zum Ablösen von materialbeschichteten Akkumulatorplatten (12) von einer beweglichen Förderunterlage (10), dadurch gekennzeichnet, daß sie ein draht- oder bandartiges Abtrennelement (20), das quer über die Förderunterlage (10) hinweg auf dessen Niveau oder in dessen Nähe angeordnet ist, und Führungselemente (30, 40), die das genannte Abtrennelement (20) in der Richtung seiner Längsachse führen sowie bewegen, umfaßt.

6. Einrichtung nach Anspruch 5, dadurch gekennzeichnet, daß die erwähnten Führungselemente (30, 40) so angeordnet worden sind, daß die Bewegungsbahn des genannten Abtrennelements (20) einen Winkel mit der Bewegungsrichtung der Förderunterlage (10) bildet.

7. Einrichtung nach Anspruch 5-6, dadurch gekennzeichnet, daß die erwähnten Führungselemente aus zwei oder mehreren Führungs- oder Antriebsrollen (30, 40), um das genannte Abtrennelement (20) zu führen und zu bewegen, bestehen.

8. Einrichtung nach Anspruch 5 bis 7, dadurch gekennzeichnet, daß das Abtrennelement (20) aus einem endlosen Draht oder Band besteht.

9. Einrichtung nach Anspruch 5-6, dadurch gekennzeichnet, daß das Abtrennelement (20) aus einem Draht oder Band besteht, der oder das mit Hilfe eines mechanischen oder elektromechanischen Schwingungserzeugers in eine hin-und hergehende Bewegung versetzt worden ist.

10. Einrichtung nach Anspruch 9, dadurch gekennzeichnet, daß das Abtrennelement (20) am einen Ende an einem Federelement (70) befestigt ist.

**Revendications**

1. Procédé destiné à détacher ou séparer des plaques d'accumulateur revêtues de matière active de la base d'un transporteur ou système de manutention à l'aide d'un élément de découpe en forme de fil ou de bande placé en travers de la base du transporteur ou bande transporteuse au niveau ou à proximité du niveau, caractérisé en ce que l'élément de découpe a été mis en mouvement dans la direction de son axe longitudinal pendant l'opération de séparation.

2. Procédé selon la revendication 1, caractérisé en ce que l'élément de découpe se déplace dans la même direction pendant toute l'opération de séparation.

3. Procédé selon la revendication 1, caractérisé en ce que l'élément de découpe effectue un mouvement de va-et-vient pendant l'opération de séparation.

4. Procédé selon les revendications 1 à 4, caractérisé en ce que le trajet de déplacement de l'élément de découpe forme un angle avec le sens de marche de la base du transporteur ou bande tranporteuse.

5. Moyen destiné à détacher des plaques d'accumulateur revêtues de matière active (12) à partir d'une base de transporteur (10) caractérisé en ce qu'il comprend un élément de découpe en forme de fil ou de bande (20) placé en travers de la base du transporteur (10) au niveau ou à proximité du niveau, et des éléments de guidage (30, 40) destinés à guider et à déplacer l'élément de découpe (20) dans la direction de son axe longitudinal.

6. Moyen selon la revendication 5, caractérisé en ce que les éléments de guidage (30, 40) ont été positionnés de telle manière que la direction de déplacement de l'élément de découpe (20) forme un angle avec la direction de déplacement du transporteur (10).

7. Moyen selon les revendications 5-6, caractérisé en ce que les éléments de guidage consistent en deux ou plus de deux rouleaux de guidage ou rouleaux d'entraînement (30, 40) destinés à guider et à déplacer l'élément de découpe (20).

8. Moyen selon les revendications 5 à 7, caractérisé en ce que l'élément de découpe (20) consiste en un fil ou en une bande sans fin.

9. Moyen selon les revendications 5-6, caractérisé en ce que l'élément de découpe (20) consiste en un fil ou une bande qui est mis en mouvement de va-et-vient à l'aide d'un oscillateur mécanique ou électromécanique.

10. Moyen selon la revendication 9, caractérisé en ce que l'élément de découpe (20) est fixé sur un élément à ressort (70) sur une extrémité.

FIG.1

FIG.3

FIG.2